# EUROPÄISCHE PATENTSCHRIFT

(11) **EP 3 978 398 B1**
(45) Veröffentlichungstag und Bekanntmachung des Hinweises auf die Patenterteilung: **13.05.2026**
(21) Anmeldenummer: 21194455.8
(22) Anmeldetag: 02.09.2021
(51) Int. Cl.: B65G 11/20, B65G 69/16

(54) **BELADEVORRICHTUNG UND VERFAHREN ZUM BELADEN EINES BEHÄLTERS MIT PACKSTÜCKEN**
LOADING DEVICE AND METHOD FOR LOADING A CONTAINER WITH PACKAGES
DISPOSITIF DE CHARGEMENT ET PROCÉDÉ DE CHARGEMENT D'UN CONTENANT POUR COLIS

(30) Priorität: 30.09.2020 DE 102020125503
(43) Veröffentlichungstag der Anmeldung: 06.04.2022
(73) Patentinhaber: Deutsche Post AG, 53113 Bonn (DE)
(72) Erfinder: GRAFE, Dr. Wolfram, 18107 Elmenhorst (DE); HARTMANN, Bernd, 53501 Grafschaft-Leimersdorf (DE)
(74) Vertreter: Cohausz & Florack

(56) Entgegenhaltungen:
- DE-A1- 102016 109 313
- FR-A- 1 456 034
- US-A- 3 565 225
- US-A1- 2011 091 292
- US-A1- 2017 096 301
- US-A1- 2019 060 959

## Beschreibung

Die Erfindung betrifft eine Beladevorrichtung zum Beladen eines Behälters, insbesondere Rollbehälter, mit Packstücken. Ferner betrifft die Erfindung ein Verfahren zum Beladen eines Behälters, insbesondere Rollbehälter, mit Packstücken unter Anwendung einer solchen Beladevorrichtung.

Behälter wie beispielsweise Rollbehälter werden regelmäßig händisch mit Packstücken beladen, um den Laderaum des Behälters effektiv ausnutzen zu können. Dies gilt insbesondere dann, wenn Packstücke unterschiedlicher Abmessungen in einen Behälter geladen werden soll. Zudem bietet das händische Beladen der Behälter mit Packstücken den Vorteil, dass das Beladen schonend für die zur verladenden Packstücke erfolgen kann. Dies ist von großer Bedeutung, da die Packstücke bei einer unsachgemäßen Behandlung beschädigt werden können und aus Kostengründen nicht so stabil und robust ausgebildet werden, dass auch größere Krafteinwirkungen auf die Packstücke zuverlässig toleriert werden können.

Eine Beladevorrichtung, die den Oberbegriff des Anspruchs 1 offenbart ist aus der US3565225A bekannt.

Die Packstücke können auch über ein Rohr zu dem entsprechenden Behälter geleitet werden, wobei die Packstücke dann nach dem Austritt aus dem Rohr in den entsprechenden Behälter fallen. Ist die Fallhöhe der Packstücke dabei zu groß, können Beschädigungen an den Packstücken nicht ausgeschlossen werden. Um mögliche Beschädigungen der Packstücke zu vermeiden, ist daher bereits vorgeschlagen worden, die Neigung der Rohre wenigstens bereichsweise zu begrenzen, um die Geschwindigkeit zu reduzieren, mit der die Packstücke aus dem Rohr austreten und in den Behälter fallen.

Unter den Behältern werden vorliegend insbesondere solche verstanden, die mehr oder weniger von oben beladen werden können und/oder primär für den Einsatz auf einem Betriebsgelände vorgesehen sind. Der Einsatz der Behälter verlangt regelmäßig keinen eigenen Antrieb der Behälter zum Verfahren derselben auf dem Betriebsgelände. Um die Behälter jedoch einfach verfahren zu können, sei es händisch oder über eine separate Antriebseinheit, bietet es sich jedoch insbesondere an, wenn die Behälter Rollen aufweisen. Derartige Behälter werden oft auch als Rollbehälter bezeichnet, Unabhängig davon werden die entsprechenden Behälter regelmäßig auch von einem Betriebsgelände zu einem anderen Betriebsgelände transportiert. Hierzu werden die Behälter dann in ein Nutzfahrzeug verladen und bedarfsweise über den öffentlichen Straßenverkehr zu einem anderen Betriebsgelände gefahren und dort wieder ausgeladen. Auch hier bietet es sich für das einfache Be- und Entladen des Nutzfahrzeugs an, wenn die Behälter als Rollbehälter ausgebildet sind.

Die bevorzugten Behälter, insbesondere Rollbehälter, sind bedarfsweise zur Entladung über eine Seite der Behälter vorgesehen, während das Beladen der Behälter sowohl von der Seite als auch von oben erfolgen kann. Die zum Be- und Entladen vorgesehene Seite des Behälters kann dabei durch wenigstens eine Tür oder wenigstens eine Klappe verschlossen sein. Vielfach wird ein versehentliches Herausfallen von Packstücken aber durch Bänder, Gurte oder Schürzen verhindert, die über die seitliche Öffnung des Behälters hinweg gespannt werden können. Diese Bänder, Gurte oder Schürzen lassen sich zum Be- und Entladen vorzugsweise öffnen. Zudem sind die Bänder, Gurte oder Schürzen vielfach in etwa horizontaler Richtung über die Öffnung des Behälters gespannt. Auch die Oberseite des Behälters kann ganz oder teilweise geschlossen werden, erforderlich ist dies jedoch grundsätzlich nicht.

Ein Beladen und/oder Entladen der Behälter muss jedoch nicht über eine Seite der Behälter möglich sein. Grundsätzlich sind auch solche Behälter ausreichend, die lediglich eine obere, bedarfsweise verschließbare, Öffnung aufweisen. Dabei sind solche Behälter besonders bevorzugt, wenn sie als Rollbehälter ausgebildet sind, so dass die Behälter über eine Mehrzahl an Rollen entlang des Untergrunds verfahren werden können. Die Behälter können aber auch ohne Rollen auskommen und beispielsweise von einer Palette getragen werden. Zudem kommen Behälter aus unterschiedlichen Materialien, beispielsweise Karton oder sogenannte Gitterboxen, in Betracht. Ferner können die Behälter unterschiedliche Grundrisse, beispielsweise einen rechteckigen, fünfeckigen, sechseckigen oder achteckigen Querschnitt, aufweisen. Nicht zuletzt müssen die Behälter auch keine festen Seitenwände im klassischen Sinne aufweisen. So kommen beispielsweise auch sogenannten Big-Bags in Frage, die in einem separaten Halter gehalten sein können.

Der vorliegenden Erfindung liegt mithin die Aufgabe zugrunde, die Beladevorrichtung und das Verfahren jeweils der eingangs genannten und zuvor näher erläuterten Art derart auszugestalten und weiterzubilden, dass das Beladen der Behälter mit Packstücken einfacher und zweckmäßiger erfolgen kann, ohne dass dadurch unverhältnismäßige Nachteile hinsichtlich möglicher Beschädigungen der Packstücke in Kauf genommen werden müssen.

Diese Aufgabe ist gemäß Anspruch 1 gelöst.

Die genannte Aufgabe ist ferner gemäß Anspruch 10 gelöst durch ein Verfahren zum Beladen eines Behälters, insbesondere Rollbehälter, mit Packstücken, mit einer Beladevorrichtung nach einem der Ansprüche 1 bis 9,
- bei dem die Packstücke nacheinander in den oberen Eintritt des Transportkanals eingebracht werden,
- bei dem die in den Eintritt des Transportkanals eingebrachten Packstücke in Kontakt mit dem wenigstens einen Fingerelement der oberen Fingerposition gelangen und von dem wenigstens einen Fingerelement abgebremst werden,
- bei dem die von dem wenigstens einen Fingerelement der oberen Fingerposition abgebremsten Packstücke in Kontakt mit dem wenigstens einen Fingerelement der unteren Fingerposition gelangen und von dem wenigstens einen Fingerelement abgebremst werden und
- bei dem die von dem wenigstens einen Fingerelement der unteren Fingerposition abgebremsten Packstücke durch den unteren Austritt des Transportkanals aus dem Transportkanal in den Behälter entlassen werden.

Erfindungsgemäß ist ein Transportkanal vorgesehen, durch den die Packstücke in Richtung des Behälters transportiert werden. Dabei ist der Transportkanal vorzugsweise so vorgesehen, dass die Schwerkraft zum Transport der Packstücke ausgenutzt wird, so dass ein zusätzlicher Antrieb für den Transport der Packstücke entbehrlich ist. Der Transortkanal ist dabei zum Transport der Packstücke nacheinander vorgesehen, was jedoch nicht bedeutet, dass nicht zeitglich mehrere Packstücke in dem Transportkanal aufgenommen sein können. Auch können grundsätzlich bedarfsweise mehrere Packstücke gemeinsam durch den Transportkanal transportiert werden. Dann ist es aber so, dass vorher oder nachher weitere Packstücke gemeinsam oder separat durch den Transportkanal transportiert werden. Es wird also immer wenigstens bezogen auf Teile der Gesamtzahl der in einen Behälter zu verladenden Packstücke ein Transport nacheinander vorgesehen sein.

Die zu verladenden Packstücke können zuvor sortiert oder auf andere Weise zusammengestellt werden. Bevorzugt werden die Packstücke durch eine Fördereinrichtung an den Transportkanal herantransportiert. Dabei bietet sich der Einfachheit halber insbesondere eine Bandfördereinrichtung an. Um eine hohe Flexibilität für den Ort des Beladens der Behälter bereitstellen zu können, bietet es sich an, wenn die Bandfördereinrichtung eine Teleskopbandfördereinrichtung ist. Darüber hinaus bietet sich auch eine Fördereinrichtung in Form eines Sorters an, der aus einem Strom von Packstücken einen Teilstrom an Packstücken abtrennt und dem Transportkanal zuleitet. Die Packstücke werden ganz grundsätzlich über einen oberen Eintritt in den Transportkanal eingebracht und diesem mithin zugeführt. Nachdem die Packstücke den Transportkanal passiert haben, treten die Packstücke an einem unteren Austritt des Transportkanals wieder aus dem Transportkanal aus und gelangen so in den Behälter, in dem der untere Austritt des Transportkanals vorzugsweise angeordnet ist. Der Austritt des Transportkanals ist dabei in Schwerkraftrichtung unterhalb des Eintritts vorgesehen, so dass die Schwerkraft für einen Transport der Packstücke vom Eintritt zum Austritt durch den Transportkanal sorgen kann.

Entlang des Transportkanals sind entlang des Transportpfads der Packstücke wenigstens zwei unterschiedliche Fingerpositionen vorgesehen, wobei die Fingerpositionen entlang des Transportkanals und in Schwerkraftrichtung auf unterschiedlichen Ebenen vorgesehen sind. Es existieren also wenigstens eine obere Fingerposition und eine untere Fingerposition. Die Fingerpositionen weisen jeweils wenigstens ein Fingerelement auf, wobei eine Mehrzahl von Fingerelementen jeweils bevorzugt sein wird. Zudem wird das wenigstens eine Fingerelement vorzugsweise mit seinem freien Ende in den Transportkanal hineinragen. Mit dem gegenüberliegenden Ende des Fingerelements kann dieses an einem Rand und/oder einer Wandung des Transportkanals angeordnet und dort bedarfsweise festgelegt sein. Im Falle einer Wandung des Transportkanals handelt es sich insbesondere um eine den Transportkanal nach außen begrenzende Wandung. Dabei muss der Transportkanal umfangsseitig nicht vollständig geschlossen sein. Die Öffnungen sollten aber nicht zu groß werden, so dass die Packstücke im Transportkanal verbleiben und nicht versehentlich aus diesem seitlich herausfallen. Die Packstücke können also während des Transports durch den Transportkanal mit den Fingern der Fingerpositionen in Kontakt kommen, wobei die Packstücke infolge dieses Kontakts abgebremst und/oder umgelenkt werden können.

Hinsichtlich der Fingerelemente macht sich die Erfindung den sogenannten Fin Ray Effekt zu Nutze, um die bedarfsweise sehr unterschiedliche Abmessungen aufweisenden Packstücke zweckmäßig und beschädigungsfrei in den Behälter laden zu können. Die Fingerelemente weisen daher jeweils wenigstens zwei sich gemeinsam von einem Ende des Fingerelements zum gegenüberliegenden Fingerelement erstreckende flexible Flankenelemente auf. Hierbei bietet es sich insbesondere an, wenn die Flankenelemente die Oberseite und die Unterseite jedes Fingerelements bilden, so dass die Packstücke stets von einem Flankenelement ergriffen werden. Zwingend erforderlich ist dies jedoch nicht. Die flexiblen Flankenelemente jedes Fingerelements sind jedoch über eine Mehrzahl von Stegen jeweils flexibel miteinander verbunden, so dass die Fingerelemente die nötige Flexibilität erhalten, um von wenigstens einer gekrümmten Stellung in wenigstens eine gestreckte Stellung und zurück verstellt werden zu können. Dabei ist es besonders zweckmäßig, wenn die Fingerelemente stufenlos gekrümmt und wieder gestreckt werden können. Dann können die Fingerelemente unterschiedliche gekrümmte Stellungen einnehmen, und zwar jeweils gerade so, wie es für das Ergreifen und Entladen eines bestimmten Packstücks geeignet ist.

Der sogenannte Fin Ray Effekt kann bei den Schwanzflossen von Knochenfischen beobachtet werden. Drückt man mit dem Finger seitlich gegen sie, krümmen sich die Flossen nicht weg, sondern biegen sich dem Finger entgegen. Möglich wird dies durch einen speziellen Aufbau der Flossen. Dieser ist bei den Fingerelementen des wenigstens einen Handelements entsprechend nachgebildet.

Die nötige Flexibilität der Fingerelemente kann beispielsweise durch elastische Flankenelemente oder durch eine Gliederkette aus schwenkbar oder gelenkig miteinander verbundenen starren Kettengliedern bereitgestellt werden. Dabei wird eine entsprechende Flexibilität lediglich in eine Raumrichtung gefordert. In den Raumrichtungen senkrecht dazu ist eine Flexibilität nicht zwingend erforderlich. Trotzdem wäre auch eine Flexibilität in zwei zueinander senkrecht stehenden Raumrichtungen denkbar und bedarfsweise auch bevorzugt. Die entsprechende Flexibilität der Flankenelemente erlaubt letztlich eine Krümmung des Fingerelements ausgehend von einer gestreckten Stellung in eine gekrümmte Stellung beispielsweise ähnlich der Krümmung eines Fingers.

Damit die Krümmung des Fingerelements in eine Richtung beispielsweise durch einen Druck gegen das Fingerelement, insbesondere gegen ein Flankenelement, in die entgegengesetzte Richtung ausgelöst werden kann, sind die wenigstens zwei Flankenelemente zwischen den beiden Enden des Fingerelements über eine Mehrzahl von Stegen jeweils flexibel miteinander verbunden. Dabei können die Stege starr ausgebildet und schwenkbar oder gelenkig mit den Flankenelementen verbunden sein. Es können aber, bedarfsweise alternativ zu schwenkbaren oder gelenkigen Verbindungen zu den wenigstens zwei Flankenelementen, auch flexible, insbesondere elastische Stege verwendet werden. Auf diese Weise wird erreicht, dass sich die Stege gegenüber den wenigstens zwei Flankenelementen schwenken können, um so eine Krümmung des Fingerelements von einer gestreckten Stellung in eine gekrümmte Stellung und zurück zu ermöglichen.

Unter einer gestreckten Stellung des Fingerelements kann eine maximal gestreckte und/oder längliche Ausrichtung des Fingerelements verstanden werden. Es kann sich aber auch um eine Stellung handeln, aus der das Fingerelement durch ein weiteres Krümmen in eine gegenüber der gestreckten Stellung weiter gekrümmte Stellung verstellt werden kann. Dementsprechend muss auch die gekrümmte Stellung keine maximal gekrümmte Stellung sein. Die Begriffe gestreckte Stellung und gekrümmte Stellung können also bedarfsweise lediglich relativ, also als relative Positionen zueinander, verstanden werden. Des Weiteren ist zu berücksichtigen, dass die Fingerelemente aus einer gestreckten Stellung in entgegengesetzte Richtung in unterschiedlich gekrümmte Stellungen verstellt werden können.

Ein Fingerelement ermöglicht aufgrund des entsprechenden Aufbaus letztlich eine Anpassung der Form an die Form der mit dem Fingerelemente in Kontakt kommenden Packstücke, wenn die Fingerelemente gegen das Packstück drücken bzw. umgekehrt. Damit kann einerseits eine größere Anlagefläche von Fingerelement und Packstück bereitgestellt werden, was sich positiv auf das Handling der Packstücke im Transportkanal auswirken kann. Der Aufbau des Fingerelements erlaubt aber auch bedarfsweise eine Vorkrümmung einzustellen, auch ohne dass ein Kontakt zwischen dem Fingerelement und dem wenigstens einen Stückgut besteht. Dazu können beispielsweise die Flankenelemente in Längsrichtung des Fingerelements gegeneinander verstellt werden. Dabei krümmt sich das Fingerelement dann von dem Flankenelement weg, das gegenüber dem wenigstens einen weiteren Flankenelement weiter in Längsrichtung zum gegenüberliegenden Ende des Fingerelements verstellt ist. Kommt nun ein Packstück mit dem entsprechend vorgekrümmten Fingerelement in Kontakt, kann sich die Krümmung des Fingerelements infolge des entsprechenden Kontakts verändern, was sich auf den Weitertransport des mit dem Fingerelement in Kontakt kommenden Packstücks zweckmäßig auswirken kann, beispielsweise im Wege eines Abbremsens oder eines Umlenkens des Packstücks infolge der Variation der Krümmung.

Um das Fingerelement beispielsweise nicht nur in einer Ebene verstellen zu können, kann das Fingerelement beispielsweise auch drei oder mehr Flankenelemente aufweisen, die untereinander über Stege miteinander verbunden sind. Dabei können die Stege beispielsweise kreuzförmig, sternförmig, rechteckig, quadratisch, oval oder rund ausgebildet sein, um einfach an allen Flankenelementen festgelegt werden zu können. Die entsprechenden Verbindungen sind dabei vorzugsweise entweder schwenkbar oder drehbar ausgebildet und/oder es sind die Stege flexibel ausgebildet.

Unter Packstücken wird bedarfsweise eine besondere Art von Stückgütern verstanden. Packstücke können dann mit Packungen verpackte Waren sein. Packstücke können mithin wenigstens eine Umverpackung aus Papier, Pappe, Gewebe oder Kunststoff aufweisen und beispielsweise als Pakete, Kisten und Behälter sowie als nicht formstabile Gebinde wie Tüten oder Säcke vorliegen.

Die Behälter sind bevorzugt Rollbehälter und bedarfsweise zur Entladung über eine Seite der Behälter vorgesehen, während das Beladen der Behälter sowohl von der Seite als auch von oben erfolgen kann. Die zum Be- und Entladen vorgesehene Seite des Behälters kann dabei durch wenigstens eine Tür oder wenigstens eine Klappe verschlossen sein. Vielfach wird ein versehentliches Herausfallen von Packstücken aber durch Bänder, Gurte oder Schürzen verhindert, die über die seitliche Öffnung des Behälters hinweg gespannt werden können. Diese Bänder, Gurte oder Schürzen lassen sich zum Be- und Entladen vorzugsweise öffnen. Zudem sind die Bänder, Gurte oder Schürzen vielfach in etwa horizontaler Richtung über die Öffnung des Behälters gespannt. Auch die Oberseite des Behälters kann ganz oder teilweise geschlossen werden, erforderlich ist dies jedoch grundsätzlich nicht.

Ein Beladen und/oder Entladen der Behälter muss jedoch nicht über eine Seite der Behälter möglich sein. Grundsätzlich sind auch solche Behälter ausreichend, die lediglich eine obere, bedarfsweise verschließbare, Öffnung aufweisen. Dabei sind solche Behälter besonders bevorzugt, wenn sie als Rollbehälter ausgebildet sind, so dass die Behälter über eine Mehrzahl an Rollen entlang des Untergrunds verfahren werden können. Die Behälter können aber auch ohne Rollen auskommen und beispielsweise von einer Palette getragen werden. Zudem kommen Behälter aus unterschiedlichen Materialien, beispielsweise Karton oder sogenannte Gitterboxen, in Betracht. Ferner können die Behälter unterschiedliche Grundrisse, beispielsweise einen rechteckigen, fünfeckigen, sechseckigen oder achteckigen Querschnitt, aufweisen. Nicht zuletzt müssen die Behälter auch keine festen Seitenwände im klassischen Sinne aufweisen. So kommen beispielsweise auch sogenannten Big-Bags in Frage, die in einem separaten Halter gehalten sein können.

Der besseren Verständlichkeit halber und zur Vermeidung von unnötigen Wiederholungen werden nachfolgend die Beladevorrichtung und das Verfahren zum Beladen des Behälters gemeinsam beschrieben, ohne jeweils im Einzelnen zwischen dem Verfahren und der Vorrichtung zu unterscheiden. Für den Fachmann ergibt sich aber dennoch anhand des Kontextes, welches Merkmal jeweils hinsichtlich des Verfahrens und der Vorrichtung besonders bevorzugt ist.

In der erfindungsgemässen Ausgestaltung der Beladevorrichtung sind an wenigstens einer Fingerposition eine Mehrzahl von Fingerelementen vorgesehen. Dadurch kommen die Packstücke zuverlässiger in Kontakt mit wenigstens einem Fingerelement der jeweiligen Fingerposition. Außerdem kann die Bewegung der Packstücke genauer und effizienter über die mehreren Fingerelemente beeinflusst werden. Hier bieten sich wenigstens zwei, vorzugsweise wenigstens drei, insbesondere wenigstens vier, weiter insbesondere wenigstens fünf Fingerelemente an. Die genaue Anzahl kann von der Größe bzw. dem Durchmesser des Transportkanals abhängen. Zudem steht dem besseren Handling der Packstücke ein höherer apparativer Aufwand entgegen.

Ebenso erfindungsgemäss ist an wenigstens einer Fingerposition wenigstens ein Handelement vorgesehen, das dann wiederum wenigstens einige Fingerelemente der Mehrzahl von Fingerelementen der jeweiligen Fingerposition umfasst. Dadurch, dass mehrere Fingerelemente zum wenigstens einen Handelement zusammengefasst werden, wird das Handling der Packstücke im Transportkanal noch effektiver und zielgerichteter möglich als mit einzelnen Fingerelementen. Die Packstücke können so bedarfsweise besser und schonender gehandhabt werden, wobei die Prinzipien der Handhabung von Packstücken durch die menschliche Hand adaptiert werden können. Es können mithin die einzelnen Fingerelemente des Handelements im Wesentlichen separat zueinander und doch auch nicht gänzlich unabhängig voneinander bewegt werden. Beispielsweise können die Fingerelemente mehr oder weniger gekrümmt und/oder gespreizt werden, wobei sich die Fingerelemente infolge des Fin Ray Effekts teilweise um die angrenzenden Packstücke herumlegen, was ein schonendes Abbremsen der Packstücke während des Transports durch den Transportkanal zur Folge haben kann. Diese Beeinflussung der Bewegungsbahn bzw. Transportbahn der Packstücke kann dabei ohne weiteres in Abhängigkeit von der Größe und/oder des Gewichts der jeweiligen Packstücke erfolgen. Dies ist ähnlich zu dem Verhalten einer menschlichen Hand.

Die Fingerelemente des wenigstens einen Handelements können sich leicht seitlich voneinander spreizend oder wenigstens im Wesentlichen parallel zueinander verlaufend angeordnet sein. Dadurch kann ein zuverlässiger Kontakt zwischen den Fingerelementen und den Packstücken sichergestellt werden, der zugleich zu einer zweckmäßigen Beeinflussung der Bewegung der Packstücke durch den Transportkanal führen kann. Alternativ oder zusätzlich können die Fingerelemente des wenigstens einen Handelements gemeinsam an einem Handflächenelement des Handelements angreifend vorgesehen sein. So können zur Beeinflussung der Bewegung der Packstücke nicht nur die verhältnismäßig flexiblen Fingerelemente, sondern auch das verhältnismäßig gesehen steifere und stabilere Handflächenelement genutzt werden.

Zur gezielteren Verstellung des wenigstens einen Fingerelements wenigstens einer Fingerposition und/oder wenigstens eines Handelements wenigstens einer Fingerposition kann dem entsprechenden Fingerelement und alternativ oder zusätzlich dem entsprechenden Handelement eine Antriebseinheit zugeordnet sein. Die Antriebseinheit dient dann dem Verstellen der wenigstens zwei Flankenelemente des jeweiligen Fingerelements in einer Längsrichtung des Fingerelements gegeneinander von einer gekrümmten in eine gestreckte Stellung und/oder zurück. So kann wenigstens ein Fingerelement wenigstens einer Fingerposition über die Antriebseinheit gezielt verstellt werden. Da ein gezieltes Verstellen von Fingerelementen grundsätzlich bevorzugt sein kann, bietet es sich in einem solchen Fall bedarfsweise an, wenn allen Fingerelementen wenigstens einer Fingerposition und/oder wenigstens eines Handelements wenigstens eine Antriebseinheit zugeordnet ist. Die Antriebseinheit dient dann zum Verstellen der wenigstens zwei Flankenelemente der jeweiligen Fingerelemente in einer Längsrichtung des Fingerelements gegeneinander von einer gekrümmten in eine gestreckte Stellung und/oder zurück.

Wenn wenigstens einem Fingerelement wenigstens einer Fingerposition und/oder wenigstens eines Handelements und/oder dem Handelement selber ein Drucksensor zugeordnet ist, kann dieser genutzt werden, den Druck zu erfassen, den Packstücke auf das Fingerelement und/oder Handelement ausüben. Dieser Druck korreliert mit den auf die Packstücke einwirkenden mechanischen Belastungen. Der Drucksensor kann also genutzt werden, die Fingerelemente so zu steuern, dass die Belastungen auf die Packstücke gering bleiben und die Packstücke nicht beschädigt werden. Dies lässt sich besonders effektiv erreichen, wenn der wenigstens eine Drucksensor wenigstens einem Flankenelement wenigstens eines Fingerelementes zugeordnet ist. So kann dann der Druck auf ein bestimmtes Flankenelement erfasst werden. Eine Erfassung des Drucks kann grundsätzlich auch dazu genutzt werden, die Bewegung der Packstücke abhängig von deren Größe und Gewicht gezielt in geeigneter aber unterschiedlicher Weise zu beeinflussen. Der Transport der Packstücke durch den Transportkanal kann so sehr zielgerichtet erfolgen.

Damit die Packstücke zuverlässig mit den Fingerelementen in den unterschiedlichen Fingerpositionen in Kontakt kommen, während die Packstücke durch den Transportkanal transportiert werden, bietet es sich an, wenn die Fingerpositionen nicht nur in Richtung der Schwerkraftrichtung, sondern auch seitlich bzw. über den Umfang versetzt angeordnet sind. So kann die Erstreckung des wenigstens einen Fingerelements und/oder Handelements einer Fingerposition in Richtung des zugehörigen freien Endes einen Winkel zwischen 45° und 315°, vorzugsweise zwischen 90° und 270°, insbesondere zwischen 135° und 225°, zur Erstreckung einen Fingerelements und/oder Handelements einer anderen Fingerposition in Richtung des zugehörigen freien Endes ausbilden. Zum Bestimmen des entsprechenden Winkels können die entsprechenden Richtungen in eine gemeinsame Ebene projiziert werden, wobei es sich anbietet, wenn diese Ebene eine horizontale Ebene und/oder eine Querschnittsebene des Transportkanals ist, da dies wenigstens im Wesentlichen die Transportrichtung der Packstücke entlang des Transportkanals berücksichtigt.

In einer besonders bevorzugten Ausgestaltung des Transportkanals sind die Fingerelemente wenigstens der oberen Fingerposition und der unteren Fingerposition einander gegenüberliegend im Transportkanal vorgesehen. Die Fingerelemente erstrecken sich also in entgegengesetzte Richtungen, so dass der zuvor beschriebene Winkel wenigstens im Wesentlichen 180° beträgt.

Weiter bevorzugt kann es dabei sein, wenn die Fingerelemente jeweils der in Schwerkraftrichtung aufeinanderfolgenden Fingerpositionen einander gegenüberliegend und sich in entgegengesetzte Richtungen erstreckend vorgesehen sind. Mithin kann auch die Erstreckung von Fingerelementen und/oder Handelementen von, insbesondere jeweils allen, in Schwerkraftrichtung aufeinander folgenden Fingerpositionen in Richtung des zugehörigen freien Endes einen Winkel zwischen 45° und 315°, vorzugsweise zwischen 90° und 270°, insbesondere zwischen 135° und 225°, einschließen. Auch hierbei bietet sich zum Bestimmen des entsprechenden Winkels der entsprechenden Richtungen an, wenn diese wenigstens jeweils in eine gemeinsame Ebene projiziert werden. Aus dem beschriebenen Grund bietet es sich auch hier an, wenn diese Ebene eine horizontale Ebene und/oder eine Querschnittsebene des Transportkanals ist. Alternativ oder zusätzlich sind in diesem Zusammenhang die Fingerelemente und/oder Handelemente von in Schwerkraftrichtung voneinander beabstandeten, insbesondere aufeinander folgenden, Fingerpositionen bevorzugt an wenigstens im Wesentlichen gegenüberliegenden Innenseiten des Transportkanals vorgesehen.

Damit die Packstücke bei Übertritt von dem Transportkanal in den Behälter nicht beschädigt werden, bietet sich ein Abstand zwischen der unteren Fingerposition und/oder untersten Fingerposition des Transportkanals oberhalb des unteren Austritts des Transportkanals von dem Austritt des Transportkanals in Schwerkraftrichtung von weniger als 2 m, vorzugsweise weniger als 1,5 m, insbesondere weniger als 1 m, weiter insbesondere weniger als 0,5 m, an. Je geringer diese Höhe ausfällt, umso geringer ist grundsätzlich die effektive Fallhöhe der Packstücke beim Hineinfallen in den Behälter. Gleichzeitig kann bei einer starken Reduzierung dieses Abstands ein übermäßiger konstruktiver Aufwand erforderlich werden, etwa wenn dann eine weitere Fingerposition erforderlich wird, um den Abstand zwischen den Fingerpositionen nicht zu groß werden zu lassen.

Zur konstruktiven Vereinfachung und für einen zweckmäßigeren Transport der Packstücke durch den Transportkanal kann der Transportkanal, insbesondere eine Mittellinie des Transportkanals, wenigstens im Wesentlichen geradlinig ausgebildet sein. So kommt auch der Transport der Packstücke nicht versehentlich ins Stocken, wodurch sich die Effektivität des Transportkanals steigern lässt. Alternativ oder zusätzlich kann der Transportkanal, insbesondere eine Mittellinie des Transportkanals, einen, bedarfsweise gemittelten, Winkel zur Schwerkraftrichtung von weniger als 45°, vorzugsweise von weniger als 30°, insbesondere von weniger als 15° aufweisen. Dann rutschen die Packstücke schnell durch den Transportkanal, ohne dabei oder beim Übertritt in den Behälter Schaden zu nehmen.

Zur Schonung der Packstücke während des Transports durch den Transportkanal kann es sich ebenfalls anbieten, wenn der Transportkanal wenigstens als ein wenigstens im Wesentlichen geschlossener, insbesondere wenigstens im Wesentlichen einen rechteckigen oder runden Querschnitt aufweisender, Kanal ausgebildet ist. Alternativ oder zusätzlich kann dem oberen Eintritt des Transportkanals ein, insbesondere sich in Schwerkraftrichtung und/oder in der Transportrichtung der Packstücke entlang des Transportkanals verjüngender, trichterförmiger Abschnitt zugeordnet sein. Dies kann das Zuführen von Packstücken vereinfachen und beschleunigen, ohne dass dadurch zu befürchten wäre, dass es zu nennenswerten Beschädigungen der Packstücke kommt.

Bei einer ersten besonders bevorzugten Ausgestaltung des Verfahrens wird die Bewegungsrichtung der Packstücke wenigstens von den Fingerelementen der oberen Fingerposition und/oder der unteren Fingerposition umgelenkt. Da die Packstücke wenigstens teilweise in der Schwerkraftrichtung transportiert werden, bietet es sich an, wenn die Packstücke dabei wenigstens teilweise in einer Richtung senkrecht zur Schwerkraftrichtung umgelenkt werden. Hier wird unter einem Transport wenigstens teilweise in Schwerkraftrichtung ein Transport nach unten verstanden. Die Bewegungsrichtung der Packstücke hat also wenigstens eine Bewegungskomponente in Schwerkraftrichtung. Dementsprechend wird unter einer Umlenkung der Bewegung der Packstücke eine Veränderung der Bewegung der Packstücke verstanden, welche die Bewegungskomponente der Packstücke in einer horizontalen Richtung manipuliert. Des Weiteren kann der Transport der Packstücke durch den Transportkanal besonders gleichmäßig erfolgen, wenn die Packstücke von wenigstens einem Fingerelement und/oder Handelement der wenigstens einen oberen Fingerposition in Richtung des wenigstens einen Fingerelements und/oder Handelements der wenigstens einen unteren Fingerposition umgelenkt werden. Dies erlaubt dann eine geeignete Manipulation der Bewegungsrichtung der Packstücke durch die Fingerelemente beider Fingerpositionen. Im Falle weiterer Fingerpositionen können die Packstücke jeweils von den Fingerelementen einer Fingerposition zu den Fingerelementen der jeweils nächsten Fingerposition in Schwerkraftrichtung geleitet werden.

Um die Packstücke abzubremsen und/oder umzulenken kann es sich anbieten, wenn die Packstücke dazu von dem wenigstens einen Fingerelement und/oder Handelement wenigstens einer Fingerposition wenigstens teilweise aufgefangen werden. Es muss sich dabei nicht um ein vollständiges Auffangen der Packstücke handeln, bei dem die Packstücke wenigstens in der Schwerkraftrichtung zur Ruhe kommen. Es reicht aus, wenn die Packstücke von dem wenigstens einen Fingerelement so aufgefangen werden, dass die Geschwindigkeit der Packstücke in der Schwerkraftrichtung deutlich reduziert wird. Dadurch kann bedarfsweise erreicht werden, dass sich die Geschwindigkeit der Packstücke betrachtet im Bereich der Fingerpositionen insgesamt nicht nennenswert erhöht oder wenigstens im Wesentlichen beibehalten wird. Es kommt also in diesem Bereich des Transportkanals bedarfsweise nicht zu einer erheblichen Beschleunigung der Packstücke, die sich einstellen würde, wenn die Packstücke den Transportkanal ohne Fingerelemente passieren würden. Alternativ oder zusätzlich kann aber auch das Umlenken und/oder Weitergeben der Packstücke entlang des Transportkanals durch ein Verstellen des wenigstens einen Fingerelements der Fingerposition und/oder des Handelements der wenigstens einen Fingerposition erfolgen. Das Verstellen des wenigstens einen Fingerelements kann dabei der Einfachheit halber durch den Kontakt mit den Packstücken selbst bewirkt werden, was eine entsprechende Steuerung der Fingerelemente entbehrlich macht. Es kann aber zum Zwecke der zielgerichteten Steuerung der Bewegung der Packstücke entlang des Transportkanals auch vorgesehen sein, wenn die Fingerelemente durch wenigstens ein entsprechendes Antriebsmittel verstellt werden. Dabei kann diese Verstellung so erfolgen, dass die Fingerelemente durch den Kontakt mit den Packstücken ergänzend verstellt werden, sofern dies zweckmäßig ist. Unter einem Verstellen, ob aktiv oder passiv, kann ein Verstellen nach unten, nach oben und/oder ein Spreizen einer Mehrzahl von Fingerelementen der Fingerposition und/oder des Handelements der Fingerposition verstanden werden.

Die Übergabe der Packstücke vom Transportkanal an den zu beladenden Behälter kann zweckmäßigerweise erfolgen, indem die aus dem unteren Austritt des Transportkanals austretenden Packstücke in Schwerkraftrichtung in den Behälter, insbesondere Rollbehälter, fallen. Dabei sollte die entsprechende Fallhöhe nicht zu groß sein, damit die Packstücke nicht beschädigt werden. Grundsätzlich bedarf es auf diese Weise aber keiner weiteren Handhabung der Packstücke.

Um eine geeignete Übergabe der Packstücke vom Transportkanal an den Behälter zu gewährleisten, kann der Einfachheit halber ein unterer, dem unteren Austritt des Transportkanals zugeordneter Abschnitt des Transportkanals während des Beladens des Behälters wenigstens zeitweise in einer in den Behälter eingesteckten Position gehalten werden. Die Packstücke fallen dann also wenigstens beim leeren oder nur geringfügig gefüllten Behältern nicht so weit im freien Fall nach unten, dass Beschädigungen der Packstücke zu befürchten wären. Damit der Transportkanal das Beladen des Behälters mit Packstücken aber nicht behindert, kann weiter vorgesehen sein, dass der untere Abschnitt des Transportkanals während des Beladens des Behälters wenigstens zeitweise und wenigstens teilweise aus dem Behälter herausgezogen wird. Das Herausziehen muss also nicht während des gesamten Beladens erfolgen. Es reicht aus, wenn dies nur in einem bestimmten Zeitintervall erfolgt. Außerdem muss der untere Abschnitt des Transportkanals nicht gänzlich aus dem Behälter herausgezogen werden. Dies gilt insbesondere dann, wenn der Behälter nicht bis ganz nach oben beladen werden muss oder soll. Verfahrensmäßig ist es in dem vorbeschriebenen Zusammenhang besonders einfach, wenn der untere Abschnitt des Transportkanals schrittweise aus dem Behälter herausgezogen wird. Dies ist steuerungs- bzw. regelungstechnisch einfacher umzusetzen.

Nachfolgend wird die Erfindung anhand einer lediglich ein Ausführungsbeispiel darstellenden Zeichnung näher erläutert. In der Zeichnung zeigt
- Fig. 1: ein Fingerelement einer erfindungsgemäßen Bandfördereinrichtung und/oder zur Durchführung der erfindungsgemäßen Verfahren in Seitenansicht,
- Fig. 2A-C: das Funktionsprinzip des Fingerelements aus Fig. 1 beim Verstellen von Flankenelementen gegeneinander,
- Fig. 3: das Funktionsprinzip des Fingerelements aus Fig. 1 beim autoadaptiven Verstellen einer Flanke,
- Fig. 4: eine erfindungsgemäße Bandfördereinrichtung in einer schematischen Seitenansicht,
- Fig. 5: eine erste erfindungsgemäße Beladevorrichtung während des Beladens eines Behälters in einer schematischen Seitenansicht und
- Fig. 6: eine zweite erfindungsgemäße Beladevorrichtung in einer schematischen Draufsicht von oben.

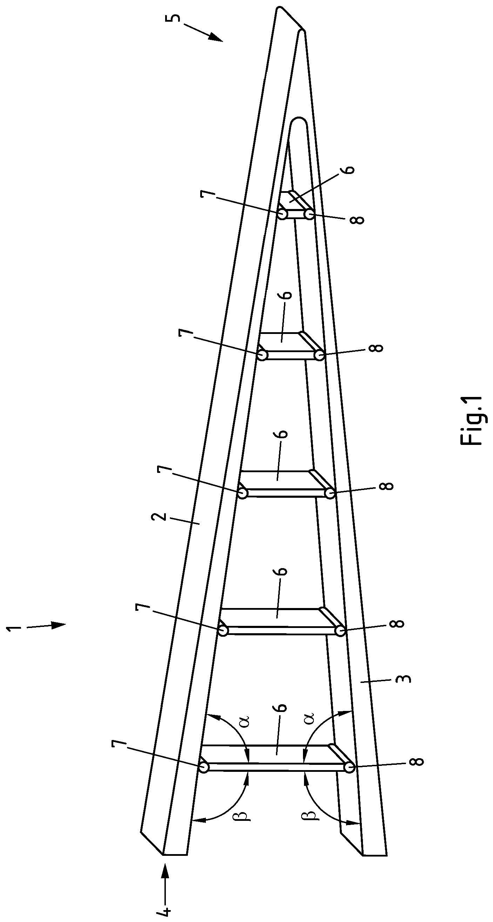

In der Fig. 1 ist ein Fingerelement 1 dargestellt, das ein autoadaptives Verformen ermöglicht. Das Fingerelement 1 weist zwei Flankenelemente 2,3 auf, die bei dem dargestellten und insoweit bevorzugten Fingerelement 1 gemeinsam von einem Ende 4 des Fingerelements 1 zum gegenüberliegenden Ende 5 des Fingerelements 1 verlaufen. Zudem nähern sich die Flankenelemente 2,3 in einer Längsrichtung des Fingerelements 1 kontinuierlich einander an. Während die Flankenelemente 2,3 an einem Ende 4 des Fingerelements 1 voneinander beabstandet sind, sind die Flankenelemente 2,3 am anderen Ende 5 des Fingerelements 1 direkt miteinander verbunden. Daher wird ein sich in eine Richtung verjüngendes, konisch zulaufendes Fingerelement 1 erhalten.

Zwischen den Flankenelementen 2,3 sind über die Länge des Fingerelements 1 verteilt Stege 6 vorgesehen, über die die Flankenelemente 2,3 miteinander verbunden sind. Beim dargestellten und insoweit bevorzugten Fingerelement 1 sind die Stege 6 an beiden gegenüberliegenden Enden 7,8 über Gelenke gelenkig mit den Flankenelementen 2,3 verbunden. Alternativ könnten die Stege 6 flexibel ausgebildet sein. Die Stege 6 sind bei dem dargestellten und insoweit bevorzugten Fingerelement 1 in gleichmäßigen Abständen über die Länge des Fingerelements 1 verteilt. Dies ist jedoch nicht zwingend erforderlich. Auch ist es nicht zwingend erforderlich, dass die Stege 6 wie bei dem dargestellten Fingerelement 1 parallel zueinander verlaufen. Bevorzugt ist es jedoch, dass die Stege 6 mit jedem der Flankenelemente 2,3 auf einer Seite einen spitzen Winkel α und auf der gegenüberliegenden Seite einen stumpfen Winkel β bilden.

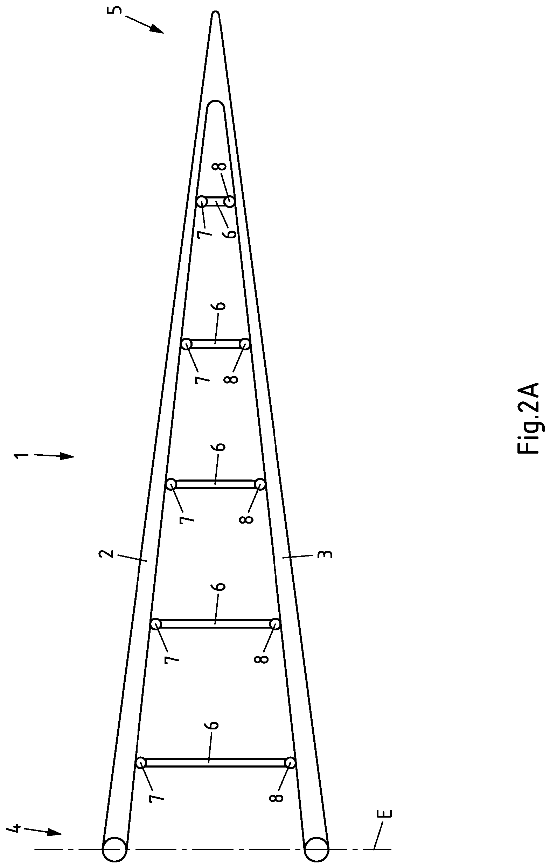

Die dargestellten und insoweit bevorzugten Flankenelemente 2,3 sind flexibel ausgebildet, so dass sich die Flankenelemente 2,3 um eine Achse senkrecht zur Längserstreckung des Fingerelements 1 biegen lassen, was insbesondere in den Fig. 2A-C dargestellt ist. Hierzu ist es zweckmäßig, wenn die Flankenelemente 2,3 aus einem flexiblen Kunststoff oder beispielsweise Gummi gebildet sind. Die Stege 6 können ebenfalls aus Kunststoff oder beispielsweise aus einem Metall gebildet sein, da die Stege 6 keine Flexibilität aufweisen müssen. In der Fig. 2A ist das Fingerelement 1 aus Fig. 1 in einer Ausgangsstellung dargestellt, bei der das Fingerelement 1 in einer gestreckten Ausrichtung vorliegt, wobei die freien Enden der Flankenelemente 2,3 in einer Ebene E angeordnet sind. Bei dem dargestellten und insoweit bevorzugten Fingerelement 1 sind die Flankenelemente 2,3 in dieser Stellung wenigstens im Wesentlichen symmetrisch zueinander ausgebildet.

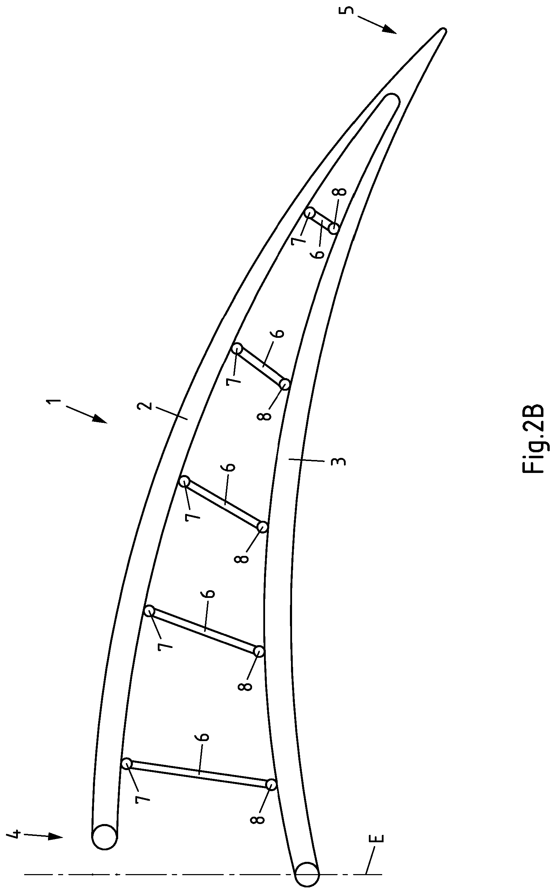

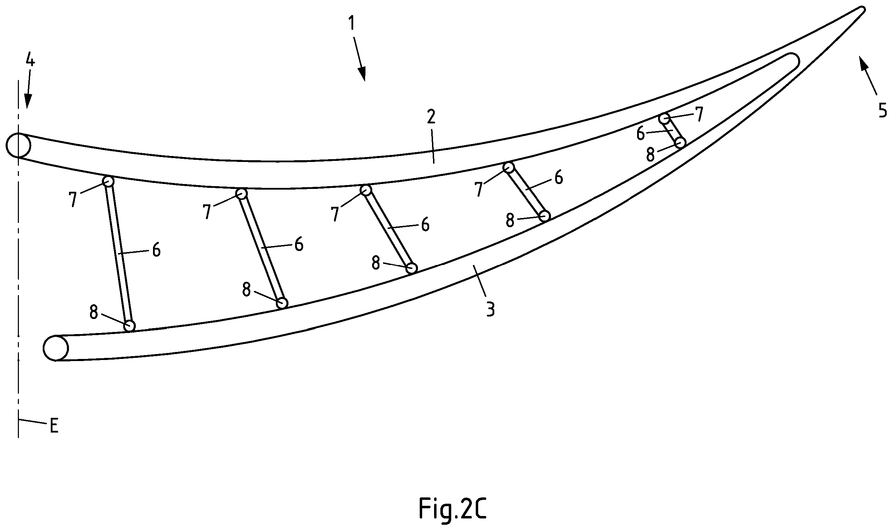

Wenn nun gemäß Fig. 2B gegenüber der Ausgangsstellung das freie Ende des oberen Flankenelements 2 aus der dargestellten Ebene E in Längsrichtung des Fingerelements 1 nach vorne verschoben wird, krümmt sich das Fingerelement 1 infolge der Verbindung der Flankenelemente 2,3 über die Mehrzahl von Stegen 6 nach unten. Es wird auf diese Weise das rechts dargestellte Ende 5 des Fingerelements 1 nach unten verstellt. Analog krümmt sich die Fingereinheit 1 gemäß Fig. 2C nach oben, wobei das entsprechende Ende 5 des Fingerelements 1 nach oben verstellt wird, wenn das freie Ende des unteren Flankenelements 3 in Längsrichtung des Fingerelements 1 aus der Ebene E nach vorne in Richtung der sich krümmenden Spitze des Fingerelements 1 verschoben wird. Den Fig. 2A-C kann ferner entnommen werden, dass die Streben 6 zwischen den Flankenelementen 2,3 sich beim Krümmen des Fingerelements 1 in unterschiedliche Richtungen neigen.

Um das Verschieben der Flankenelemente 2,3 analog zu den Fig. 2A-C zu bewerkstelligen, kann eine nicht dargestellte Antriebseinheit vorgesehen sein. Dabei sind geeignete Antriebseinheiten aus dem Stand der Technik bekannt. Geeignete Antriebseinheiten können beispielsweise wenigstens einen Linearantrieb aufweisen. So kann wenigstens ein Flankenelement 2,3 problemlos in Längsrichtung des Fingerelements 1 vor und zurück verstellt werden.

Nicht dargestellt ist, dass auch mehr als zwei, beispielsweise wenigstens drei oder vier, Flankenelemente vorgesehen sein können. Der Einfachheit halber sind diese dann, insbesondere gleichmäßig, verteilt um eine Längsachse des Fingerelements angeordnet. Die mehreren Flankenelemente können dann, insbesondere mit freien Enden, in einer gemeinsamen Spitze des Fingerelements zusammenlaufen. Zudem oder alternativ können die Stege vorzugsweise jeweils alle Flankenelemente miteinander verbinden. Die dargestellten und insoweit bevorzugten Flankenelemente 2,3 sind streifenförmig ausgebildet. Es wäre aber auch eine plattenförmige oder stabförmige Ausgestaltung der Flankenelemente möglich.

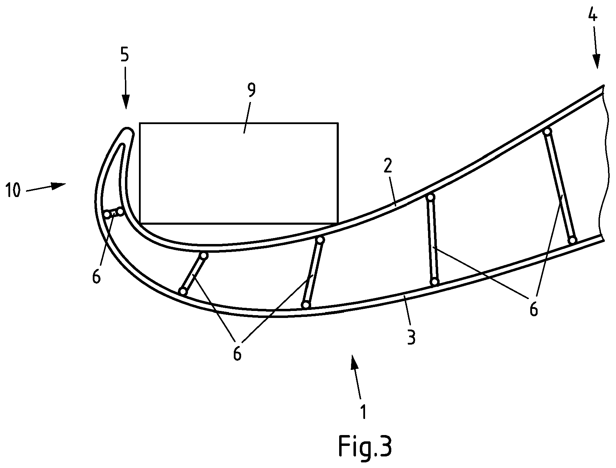

Das beschriebene Fingerelement 1 kann aber noch anders als in den Fig. 2A-C dargestellt verstellt werden, und zwar gemäß Fig. 3, die ein autoadaptives Verstellen eines Flankenelements 2,3 des Fingerelements 1 zeigt, während ein Packstück 9 auf das obere Flankenelement 2 des Fingerelements drückt und dabei abschnittsweise nach oben gebogen wird. Das entsprechende Flankenelement 2 wird lokal in Richtung der Druckkraft F nach innen bezogen auf das Fingerelement 1 verschoben, was infolge der Kopplung der Flankenelemente 2,3 über die Stege 6 dazu führt, dass das Flankenelement 2 an einer anderen Stelle, und zwar in Richtung der beiden miteinander verbundenen Enden 10 der Flankenelemente 1 an dem links dargestellten Ende 5 der Fingereinheit 5, in Richtung des Packstücks 9 gekrümmt wird. Dadurch wird das Packstück 9 von dem Fingerelement 1 teilweise umgriffen.

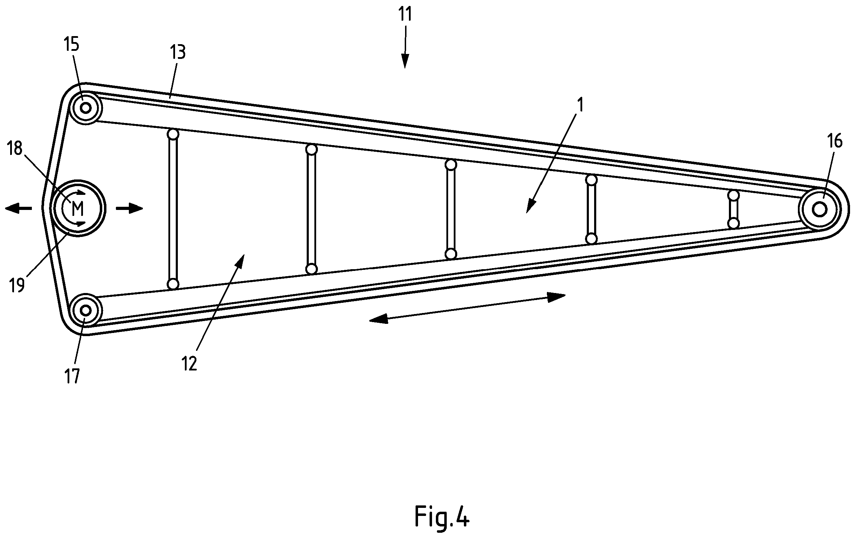

In der Fig. 4 ist eine Bandfördereinrichtung 11 dargestellt, bei der die Tragkonstruktion 12 der Bandfördereinrichtung 11 aus einem Fingerelement 1 gemäß Fig. 1 besteht. Das Förderband 13 der Bandfördereinrichtung 11 läuft um die Tragkonstruktion 12 und damit um das Fingerelement 1 herum. Dazu weist die dargestellte und insoweit bevorzugte Bandfördereinrichtung 11 mehrere Umlenkungen in Form von Umlenkrollen 15,16,17 auf. Eine Umlenkrolle 15 ist an den miteinander verbundenen Enden 10 der Flankenelemente 2,3 vorgesehen, wobei die Umlenkrolle 15 letztlich von dem entsprechenden Ende 5 des Fingerelements 1 getragen und gestützt wird. Ferner ist jeweils eine Umlenkung in Form einer Umlenkrolle 16,17 an den freien Enden der Flankenelemente 2,3 vorgesehen. Des Weiteren ist ein Antrieb 18 vorgesehen, der bei der dargestellten und insoweit bevorzugten Bandfördereinrichtung 13 das Förderband 13 in unterschiedliche Richtungen antreiben kann. Der Antrieb 18 erfolgt über eine Antriebsrolle 19, die bedarfsweise zum Spannen des Förderbands 13 beispielsweise in Längsrichtung des Fingerelements 1 verstellt werden kann. Zudem kann für einen schlupffreien Antrieb des Förderbands 13 an dem Förderband 13 eine Verzahnung vorgesehen sein, die mit einer Verzahnung der Antriebsrolle 19 kämmt. Anders als bei der dargestellten und insoweit bevorzugten Bandfördereinrichtung 11 kann die Tragkonstruktion 12, um die das Förderband 13 umläuft, neben dem Fingerelement 1 noch weitere Tragstrukturteile aufweisen.

Bei der dargestellten und insoweit bevorzugten Bandfördereinrichtung 11 wird das Förderband 13 entlang der Flankenelemente 2,3 geführt, und zwar so nahe, dass das Förderband 13 bedarfsweise durch ein Packstück 9 gegen ein Flankenelement 2,3 gedrückt werden kann. Das Fingerelement 1 kann dabei autoadaptiv oder proaktiv in Bezug auf das entsprechende Packstück 9 verstellt werden, wie dies bereits beschrieben worden ist. Es können bei dem Fingerelement 1 der in der Fig. 4 dargestellten Bandfördereinrichtung 11 also auch die Flankenelemente 2,3 in Längsrichtung des Fingerelements 1 gegeneinander verschoben werden, um das Fingerelement 1 zu krümmen. Mit dem dadurch einhergehenden Verstellen eines Endes 5 des Fingerelements 1 in einer Richtung senkrecht zur Längserstreckung des Fingerelements 1 wird auch das Förderband 13 und dessen Verlauf um das Fingerelement 1 herum verstellt. Wenn das Förderband 13 auch bei einem gekrümmten Fingerelement 1 in geringem Abstand zu den Flankenelementen 2,3 an diesen entlang geführt werden soll, müssen bedarfsweise weitere nicht dargestellte Einrichtungen zum Positionieren des Förderbands 13 zwischen den Umlenkrollen 15,16,17 angrenzend zu den Flankenelementen 2,3 oder wenigstens einem Flankenelement 2,3 vorgesehen werden.

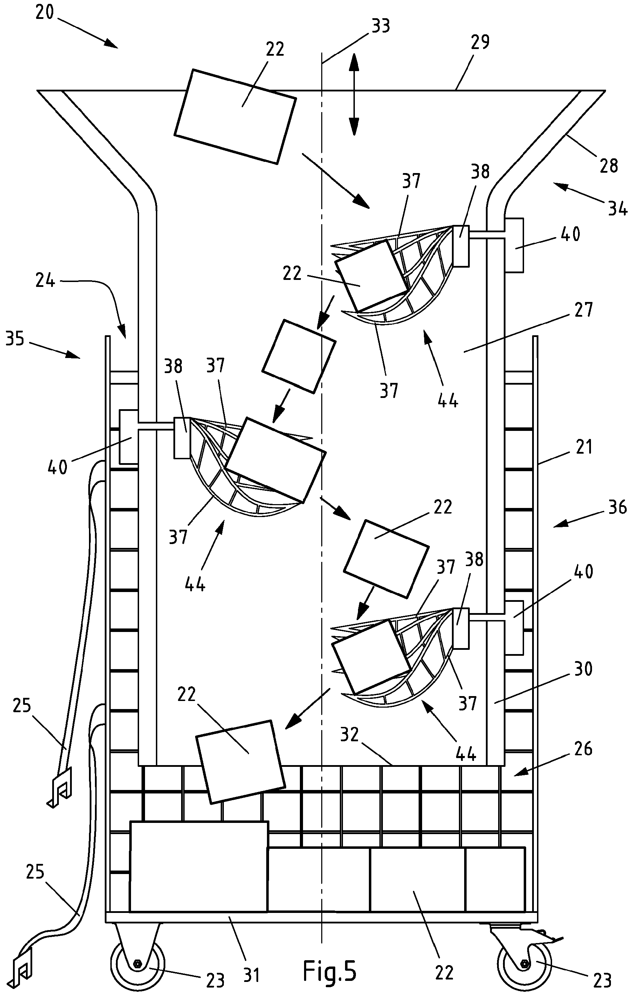

In der Fig. 5 ist eine Beladevorrichtung 20 zum Beladen eines Behälters 21 mit Packstücken 22 dargestellt, während mit der Beladevorrichtung 20 ein Behälter 21 mit Packstücken 22 beladen wird, bei dem es sich um einen Rollbehälter handelt. Der Rollbehälter weist Rollen 23 auf, um den Behälter 21 verfahren zu können. Zudem ist der Behälter 21 nach oben und nach vorne hin offen. Während das obere Ende 24 bei dem Behälter 21 nicht verschlossen werden kann, sind an einer Seite des Behälters 21 Gurte 25 vorgesehen, die über die Vorderseite 26 des Behälters 21 gespannt werden können, um ein versehentliches Herausfallen von Packstücken 22 zu vermeiden. Der besseren Übersichtlichkeit halber, sind die Gurte 25 in der Fig. 5 nicht über die Vorderseite 26 zur gegenüberliegenden Seite gespannt, auch wenn dies während des Beladens des Behälters 21 grundsätzlich zweckmäßig wäre. Alternativ zu den Gurten 25 könnte auch wenigstens eine Tür oder wenigstens eine Klappe oder wenigstens eine Schürze vorgesehen sein, mit der die Vorderseite 26 soweit verschlossen werden kann, dass ein Herausfallen von Packstücken 22 vermieden wird. Des Weiteren können, wie bereits einleitend beschrieben worden ist, auch andere Behälter zum Einsatz kommen, die als Rollbehälter ausgebildet sein können aber nicht müssen.

Die dargestellte und insoweit bevorzugte Beladevorrichtung 20 umfasst einen Transportkanal 27, der in Form einer Röhre ausgebildet ist und mithin einen kreisrunden Querschnitt aufweist. Dies ist jedoch nicht zwingend der Fall. Es könnte beispielsweise auch ein rechteckiger, quadratischer oder ovaler Querschnitt vorgesehen sein. Zudem ist bei der dargestellten und insoweit bevorzugten Beladevorrichtung 20 an einem oberen Abschnitt des Transportkanals 27 ein trichterförmiger Abschnitt 28 vorgesehen, der sich nach unten hin verjüngt. Das obere Ende dieses oberen Abschnitts bildet ein Eintritt 29 zum Zuführen der Packstücke 22 zum Transportkanal 27. Beim Beladen des Behälters 21 mit Packstücken 22 befindet sich bei dem dargestellten und insoweit bevorzugten Ausführungsbeispiel der Beladevorrichtung 20 zudem ein unterer Abschnitt 30 des Transportkanals 27 in dem zu beladenen Behälter 21, der nur im Bereich des Bodens 31 Packstücke 22 aufweist. Am unteren Ende des unteren Abschnitts 30 des Transportkanals 27 ist ein Austritt 32 für die Packstücke 22 zum Zuführen der Packstücke 22 in den Behälter 21 vorgesehen. In dem Maße, wie sich der Behälter 21 mit Packstücken 22 füllt, kann der untere Abschnitt 30 des Transportkanals 27, insbesondere schnittweise, nach oben und damit zunehmend aus dem Behälter 21 herausgezogen werden. Bedarfsweise ist der untere Abschnitt 30 des Transportkanals 27 beim Einladen der letzten Packstücke 22 bzw. bei nahezu gefülltem Behälter 21 in Gänze aus dem Behälter 21 herausgezogen.

Bei der dargestellten und insoweit bevorzugten Beladevorrichtung 20 ist der Transportkanal 27 senkrecht ausgerichtet. Mithin ist die Mittellinie 33 des Transportkanals 27 wenigstens im Wesentlichen parallel zur Schwerkraftrichtung vorgesehen. Dies erweist sich als platzsparend, ist aber keinesfalls zwingend erforderlich. Beispielsweise könnte die Mittellinie 33 gegenüber der Schwerkraftrichtung geneigt sein. Grundsätzlich weniger bevorzugt aber denkbar wäre es auch, wenn sich die Mittellinie 33 des Transportkanals 27 auch annähernd zickzackförmig von einer Seite zur anderen Seite hin und her erstrecken würde, und zwar in der Transportrichtung der Packstücke 22.

Zwischen dem Eintritt 29 des Transportkanals 27 zum Zuführen von Packstücken 22 und dem Austritt 32 des Transportkanals 27 zum Austreten der Packstücke 22 in Richtung des Behälters 21 sind in Schwerkraftrichtung drei Fingerpositionen 34,35,36 angeordnet, an denen jeweils eine Mehrzahl von Fingerelementen 37 vorgesehen ist. Vorliegend sind jeweils fünf Fingerelemente 37 an einer Fingerposition 34,35,36 vorgesehen. Es könnten aber auch beispielsweise zwei, drei oder vier Fingerelemente 37 vorgesehen sein. Jede andere Anzahl Fingerelemente 37 wäre ebenfalls denkbar, wie auch denkbar ist, dass die Anzahl der Fingerelemente 37 von Fingerposition 34,35,36 zu Fingerposition 34,35,36 variiert, sofern sich dies als zweckmäßig erweisen sollte. Dies könnte unter Umständen der Fall sein, wenn der Transportkanal 37 sich von seinem Eintritt 29 bis zu seinem Austritt 32 konisch verjüngt. Dann ist nach unten hin immer weniger Platz für die Fingerelemente 37 vorhanden.

Bei der dargestellten und insoweit bevorzugten Beladevorrichtung 20 sind die Fingerelemente 37 nicht direkt an der Wand des Transportkanals 27 angeordnet oder festgelegt, was grundsätzlich jedoch möglich wäre. Vielmehr sind die Fingerelemente 37 einer Fingerposition 34,35,36 gemeinsam an einem Handflächenelement 28 gehalten, wobei das Handflächenelement 38 bedarfsweise so vorgesehen sein kann, dass das Handflächenelement 38 gemeinsam mit den zugehörigen Fingerelementen 37 in der Höhe und/oder zur Seite verstellt werden kann. Erforderlich ist dies jedoch nicht. Mithin ergibt sich aus den Fingerelementen 37 zusammen mit den Handflächenelementen 38 jeweils ein Handelement 39, das funktional der menschlichen Hand nachempfunden sein kann.

Zum Beladen des Behälters 21 werden die Packstücke 22, die mit einer Fördereinrichtung herantransportiert werden können, automatisch oder händisch in den oberen Abschnitt des Transportkanals 27 eingeworfen und dem oberen Eintritt 29 des Transportkanals 27 auf diese Weise zugeführt. Bei der Fördereinrichtung handelt es sich vorzugsweise um eine Bandfördereinrichtung, insbesondere um einen Teleskopbandförderer oder einen sogenannten Sorter. Letztere Fördereinrichtungen können die Packstücke 22 vereinzelt nacheinander zuführen und in den Transportkanal 27 abwerfen, ohne dass dies durch einen Bediener übernommen werden müsste. Die dem Eintritt 29 des Transportkanals 27 zugeführten Packstücke 22 werden zunächst in dem oberen trichterförmigen Abschnitt 28 des Transportkanals 27 in diesem ansatzweise zentriert und gelangen dann bedarfsweise in Kontakt mit den Fingerelementen 37 des Handelements 39 der obersten Fingerposition 34.

Die Fingerelemente 37 der obersten Fingerposition 34 werden bei dem dargestellten und insoweit bevorzugten Ausführungsbeispiel über eine zugehörige Antriebseinheit 40 leicht nach oben hin gekrümmt, so dass die freien Enden der Fingerelemente 37 leicht angehoben sind. Somit wird eine leicht geöffnet menschliche Hand nachgebildet, deren Handinnenfläche nach oben weist. Die Packstücke 22 gelangen in Kontakt mit dem derart voreingestellten Handelement 39, wobei die Packstücke 22 in gewissem Maße aufgefangen werden. Infolge des Gewichts der Packstücke 22 werden die Fingerelemente 37 insgesamt nach unten verstellt, wobei infolge des Fin Ray Effekts die Fingerelemente 37 weiter gekrümmt werden können. Diese Krümmung bewirkt, dass die Fingerspitzen gegenüber dem Fingerelement 37 als solchem nach oben verstellt werden, während das Fingerelement 37 insgesamt nach unten verstellt werden kann, um dem Gewicht des Packstücks 22 nachzugeben. Auf diese Weise werden die Packstücke 22 nicht nur abgebremst sondern auch in ihrer Bewegungsrichtung umgelenkt. Vorliegend erfolgt diese Umlenkung in Richtung des Handelements 39 der in Schwerkraftrichtung nachfolgenden Fingerposition 35.

Grundsätzlich ist es aber nicht zwingend erforderlich, dass die Fingerelemente 37 des Handelements 39 durch eine Antriebseinheit 40 verstellt werden. Beispielsweise für den Fall, dass die Fingerelemente 37 in der Ruhelage in geeigneter Weise im Transportkanal 27 ausgerichtet und hinsichtlich ihres Aufbaus an die Größe und das Gewicht der Packstücke 22 angepasst sind, kann eine entsprechende Antriebseinheit 40 entbehrlich sein. Dabei können alle Handelemente 39 des Transportkanals 27 mit einer Antriebseinheit 40 versehen sein oder ohne eine solche auskommen. Es kann auch vorgesehen sein, dass manche Handelemente 39 des Transportkanals 27 einer Antriebseinheit 40 zugeordnet sind und andere nicht. Zudem müssen auch nicht alle Fingerpositionen 34,35,36 ein Handelement 39 aufweisen. Bedarfsweise ist es ausreichend, wenn einzelne oder gar alle Fingerpositionen 34,35,36 lediglich ein Fingerelement 37 oder mehrere Fingerelemente 37 aufweisen. Bei dem dargestellten und insoweit bevorzugten Transportkanal 27 sind die Fingerpositionen 34,35,36 aber mit Handelementen 39 ausgestattet, wie sie zuvor bereits für die oberste Fingerposition 34 beschrieben worden sind.

Nachdem ein Packstück 22 von dem Handelement 39 der obersten Fingerposition 34 abgebremst und zur Seite umgelenkt worden ist, fällt das Packstück 22 in Richtung der nächsten, mittleren Fingerposition 35, wobei die Geschwindigkeit des Packstücks 22 im freien Fall zunimmt. An der mittleren Fingerposition 35 angekommen, gelangt das Packstück 22 in Kontakt mit dem Handelement 39 der mittleren Fingerposition 35 und wird wie für das Handelement 35 der obersten Fingerposition 34 in gewissem Maße aufgefangen und umgelenkt, und zwar in Richtung der untersten Fingerposition 36. Bis das Packstück 22 die unterste Fingerposition 36 erreicht, beschleunigt das Packstück 22 wieder etwas in der Schwerkraftrichtung. Das Handelement 39 der untersten Fingerposition 36 bremst das Packstück 22 aber wiederum wie beschrieben ab, so dass das Packstück 22 dann mit moderater Geschwindigkeit durch den Austritt 32 des Transportkanals 27 in den Behälter 21 fällt. Das Packstück 22 landet in dem Behälter 21 mithin sanft genug, als dass das Packstück 22 dabei keinen Schaden nimmt. Zu diesem Zweck ist die unterste Fingerposition 36 bei dem dargestellten und insoweit bevorzugten Transportkanal 27 in Schwerkraftrichtung nicht weiter als 1m von dem Austritt 32 des Transportkanals 27 beabstandet.

Welchen Bewegungspfad die Packstücke 22 im Einzelnen entlang des Transportkanals 27 beschreiten hängt ab von der Größe und vom Gewicht der Packstücke 22. Der Bewegungspfad kann also für einzelne Packstücke 22 von dem dargestellten Bewegungspfad abweichen. So kann es auch vorkommen, dass insbesondere kleine aber schwere Packstücke 22 nicht mit allen Handelementen 39 eines Transportkanals 27 in Kontakt kommen. Dies kann aber toleriert werden, solange diese Packstücke 22 auf ihrem Weg durch den Transportkanal 27 hinreichend abgebremst werden, so dass die Packstücke 22 langsam genug in den Behälter 21 fallen. Andernfalls ist gegebenenfalls die Voreinstellung der Fingerelemente 37 über die Antriebseinheit 40 anzupassen oder aber sind die Handelemente 39 selbst anzupassen, also beispielsweise gegen längere und steifere Handelemente 39 auszutauschen.

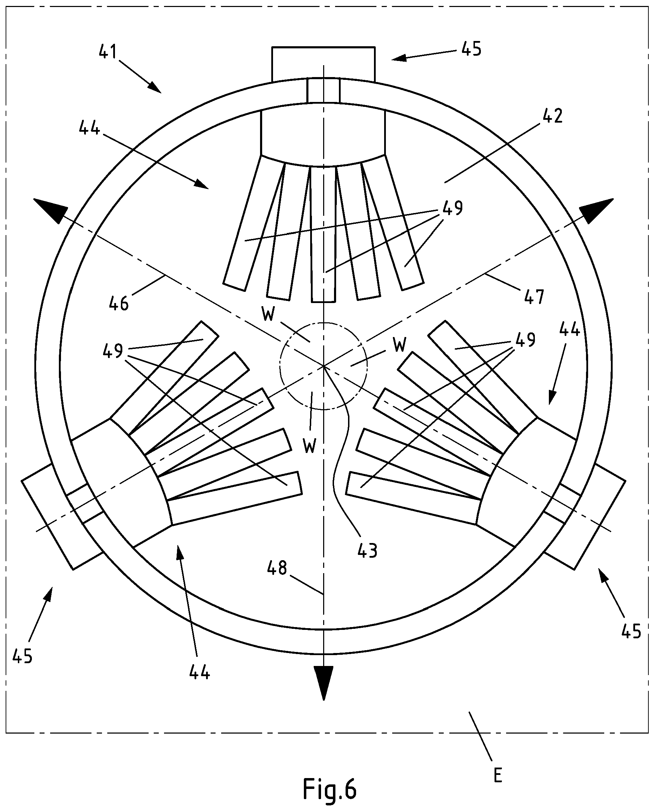

In der Fig. 6 ist eine alternative Beladevorrichtung 41 in einer schematischen Draufsicht von oben dargestellt. Der Transportkanal 42 weist einen kreisrunden Querschnitt auf und die Mittellinie 43 des Transportkanals 42 erstreckt sich senkrecht zur Zeichenebene. In dem Transportkanal 42 sind anders als bei dem Transportkanal 27 der Fig. 5 die Handelemente 44 der Fingerpositionen 45 nicht einander gegenüberliegend angeordnet, sondern in geringerem Maße seitlich zueinander versetzt. Dabei sind die Handelemente 44 der Fingerpositionen 45 aber dennoch jeweils in einem vertikalen Abstand zueinander angeordnet. Bedarfsweise weist der in der Fig. 6 dargestellte Transportkanal 42 drei oder mehr Fingerpositionen 45 auf. Sind mehr als drei Fingerpositionen 45 vorgesehen, sind die Handelemente 44 mehrerer Fingerpositionen 45 in der Ansicht der Fig. 6 deckungsgleich zueinander vorgesehen.

Für jedes der dargestellten Handelemente 44 kann eine Richtung 46,47,48 definiert werden, welche die Richtung der Fingerelemente 49 des Handelements 44 in Richtung ihrer freien Enden berücksichtigt und zu einer gemeinsamen Richtung der Fingerelemente 49 des jeweiligen Handelements 44 zusammenfasst. Diese Richtungen 46,47,48 der aufeinanderfolgenden Handelemente 44 lassen sich nun in eine Querschnittsebene E des Transportkanals 27 projizieren, die sich vorliegend horizontal und parallel zur Zeichenebene bzw. senkrecht zur Mittellinie 43 erstreckt. In dieser Projektion schließen die zuvor beschriebenen Richtungen 46,47,48 bei dem dargestellten und insoweit bevorzugten Ausführungsbeispiel einen Winkel W ein, der etwa 120° beträgt. Grundsätzlich wären aber auch andere Winkel denkbar, wobei es grundsätzlich bevorzugt sein wird, wenn die Handelemente 44 wenigstens im Wesentlichen geleichmäßig über den Umfang des Transportkanals 42 verteilt angeordnet sind.

### Bezugszeichenliste

- 1: Fingerelement
- 2,3: Flankenelement
- 4,5: Ende Fingerelement
- 6: Steg
- 7,8: Ende Steg
- 9: Packstück
- 10: Ende
- 11: Bandfördereinrichtung
- 12: Tragkonstruktion
- 13: Förderband
- 15: Umlenkrolle
- 16: Umlenkrolle
- 17: Umlenkrolle
- 18: Antrieb
- 19: Antriebsrolle
- 20: Beladevorrichtung
- 21: Behälter
- 22: Packstücke
- 23: Rollen
- 24: Ende
- 25: Gurte
- 26: Vorderseite
- 27: Transportkanal
- 28: trichterförmiger Abschnitt
- 29: Eintritt
- 30: unterer Abschnitt
- 31: Boden
- 32: Austritt
- 33: Mittellinie
- 34-36: Fingerpositionen
- 37: Fingerelement
- 38: Handflächenelement
- 39: Handelement
- 40: Antriebseinheit
- 41: Beladevorrichtung
- 42: Transportkanal
- 43: Mittellinie
- 44: Handelement
- 45: Fingerposition
- 46-48: Richtungen
- 49: Fingerelement
- E: Querschnittsebene
- W: Winkel

## Patentansprüche

1. Beladevorrichtung (20) zum Beladen eines Behälters (21), insbesondere Rollbehälter, mit Packstücken, umfassend einen Transportkanal (27) zum Transport der Packstücke (22) nacheinander in Richtung des Behälters (21), wobei der Transportkanal (27) einen oberen Eintritt (29) zum Zuführen der Packstücke (22) in den Transportkanal (27) und einen unteren Austritt (32) zum Zuführen der Packstücke (22) in den Behälter (21) aufweist und wobei in dem Transportkanal (27) wenigstens eine obere Fingerposition (34,35) mit wenigstens einem Fingerelement (49) und wenigstens eine untere Fingerposition (35,36) mit wenigstens einem Fingerelement (49) vorgesehen sind, **dadurch gekennzeichnet, dass** die wenigstens einen Fingerelemente (49) der oberen Fingerposition (34,35) und der unteren Fingerposition (35,36) jeweils wenigstens zwei sich gemeinsam von einem Ende des Fingerelements (49) zum gegenüberliegenden Ende des Finderelements (49) erstreckende flexible Flankenelemente (2,3) aufweisen, dass jeweils die wenigstens zwei flexiblen Flankenelemente (2,3) der Fingerelemente (49) über eine Mehrzahl von Stegen (6) jeweils flexibel miteinander verbunden sind, so dass die Fingerelemente (49) jeweils von wenigstens einer gekrümmten Stellung in wenigstens eine gestreckte Stellung und zurück verstellt werden können, dass an wenigstens einer Fingerposition (34,35,36) eine Mehrzahl von Fingerelementen (49) vorgesehen ist und dass an wenigstens einer Fingerposition (34,35,36) wenigstens ein Handelement (44) umfassend wenigstens einige Fingerelemente (49) der Mehrzahl von Fingerelementen (49) der jeweiligen Fingerposition (34,35,36) vorgesehen ist.

2. Beladevorrichtung nach Anspruch 1,
**dadurch gekennzeichnet, dass** die Fingerelemente (49) des wenigstens einen Handelements (44) sich leicht seitlich voneinander spreizend oder wenigstens im Wesentlichen parallel zueinander verlaufend angeordnet sind und/oder dass die Fingerelemente (49) des wenigstens einen Handelements (44) gemeinsam an einem Handflächenelement (38) des Handelements (44) angreifend vorgesehen sind.

3. Beladevorrichtung nach Anspruch 1 oder 2,
**dadurch gekennzeichnet, dass** wenigstens einem Fingerelement (49) wenigstens einer Fingerposition (34,35,36) und/oder wenigstens eines Handelements (44) wenigstens einer Fingerposition (34,35,36) wenigstens eine Antriebseinheit (40) zum Verstellen der wenigstens zwei Flankenelemente (2,3) des jeweiligen Fingerelements (49) in einer Längsrichtung des Fingerelements (49) gegeneinander von einer gekrümmten in eine gestreckten Stellung und/oder zurück zugeordnet ist und dass, vorzugsweise, allen Fingerelementen (49) wenigstens einer Fingerposition (34,35,36) und/oder wenigstens eines Handelements (44) wenigstens eine Antriebseinheit (40) zum Verstellen der wenigstens zwei Flankenelemente (2,3) des jeweiligen Fingerelements (49) in einer Längsrichtung des Fingerelements (49) gegeneinander von einer gekrümmten in eine gestreckten Stellung und/oder zurück zugeordnet ist.

4. Beladevorrichtung nach einem der Ansprüche 1 bis 3,
**dadurch gekennzeichnet, dass** wenigstens einem Fingerelement (49) wenigstens einer Fingerposition (34,35,36) und/oder wenigstens eines Handelements (44), insbesondere wenigstens einem Flankenelement (2,3) wenigstens eines Fingerelementes (49), wenigstens ein Drucksenor zum Erfassen des auf das Flankenelement (2,3), das Fingerelement (49) und/oder das Handelement (44) ausgeübten Drucks zugeordnet ist.

5. Beladevorrichtung nach einem der Ansprüche 1 bis 4,
**dadurch gekennzeichnet, dass** die Erstreckung des wenigstens einen Fingerelements (49) und/oder Handelements (44) einer Fingerposition (34,35,36) in Richtung des zugehörigen freien Endes in einer Projektion in eine horizontale Ebene und/oder eine Querschnittsebene (E) des Transportkanals (27) einen Winkel (W) zwischen 45° und 315°, vorzugsweise zwischen 90° und 270°, insbesondere zwischen 135° und 225°, zur Erstreckung eines Fingerelements (49) und/oder Handelements (44) einer anderen Fingerposition (34,35,36) in Richtung des zugehörigen freien Endes ausbildet und dass, vorzugsweise, die Erstreckung von Fingerelementen (49) und/oder Handelementen (44) von, insbesondere jeweils allen, in Schwerkraftrichtung aufeinanderfolgenden Fingerpositionen (34,35,36) in Richtung des zugehörigen freien Endes in einer Projektion in eine horizontale Ebene und/oder eine Querschnittsebene (E) des Transportkanals (27) einen Winkel (W) zwischen 45° und 315°, vorzugsweise zwischen 90° und 270°, insbesondere zwischen 135° und 225°, einschließen.

6. Beladevorrichtung nach einem der Ansprüche 1 bis 5,
**dadurch gekennzeichnet, dass** die Fingerelemente (49) und/oder Handelemente (44) von in Schwerkraftrichtung voneinander beabstandeten, insbesondere aufeinanderfolgenden, Fingerpositionen (34,35,36) an wenigstens im Wesentlichen gegenüberliegenden Innenseiten des Transportkanals (27) vorgesehen sind.

7. Beladevorrichtung nach einem der Ansprüche 1 bis 5,
**dadurch gekennzeichnet, dass** die untere und/oder unterste Fingerposition (35,36) des Transportkanals (27) oberhalb des unteren Austritts (32) des Transportkanals (27) in Schwerkraftrichtung weniger als 2 m, vorzugsweise weniger als 1,5 m, insbesondere weniger als 1 m, weiter insbesondere weniger als 0,5 m, von dem Austritt (32) des Transportkanals (27) beabstandet ist.

8. Beladevorrichtung nach einem der Ansprüche 1 bis 7,
**dadurch gekennzeichnet, dass** der Transportkanal (27), insbesondere eine Mittellinie (43) des Transportkanals (27), wenigstens im Wesentlichen geradlinig ausgebildet ist und/oder dass der Transportkanal (27), insbesondere eine Mittellinie (43) des Transportkanals (27), einen Winkel zur Schwerkraftrichtung von weniger als 45°, vorzugsweise von weniger als 30°, insbesondere von weniger als 15° aufweist.

9. Beladevorrichtung nach einem der Ansprüche 1 bis 8,
**dadurch gekennzeichnet, dass** der Transportkanal (27) wenigstens als ein wenigstens im Wesentlichen geschlossener, insbesondere wenigstens im Wesentlichen einen rechteckigen oder runden Querschnitt aufweisender, Kanal ausgebildet ist und/oder dass dem oberen Eintritt (29) des Transportkanals (27) ein, insbesondere sich in Schwerkraftrichtung und/oder in der Transportrichtung der Packstücke (22) entlang des Transportkanals (27) verjüngender, trichterförmiger Abschnitt (28) zugeordnet ist.

10. Verfahren zum Beladen eines Behälters (21), insbesondere Rollbehälter, mit Packstücken (22), mit einer Beladevorrichtung (20) nach einem der Ansprüche 1 bis 9,
- bei dem die Packstücke (22) nacheinander in dem oberen Eintritt (29) des Transportkanals (27) eingebracht werden,
- bei dem die in den Eintritt (29) des Transportkanals (27) eingebrachten Packstücke (22) in Kontakt mit dem wenigstens einen Fingerelement (49) der oberen Fingerposition (34,35) gelangen und von dem wenigstens einen Fingerelement (49) abgebremst werden,
- bei dem die von dem wenigstens einen Fingerelement (49) der oberen Fingerposition (34,35) abgebremsten Packstücke (22) in Kontakt mit dem wenigstens einen Fingerelement (49) der unteren Fingerposition (35,36) gelangen und von dem wenigstens einen Fingerelement (49) abgebremst werden und
- bei dem die von dem wenigstens einen Fingerelement (49) der unteren Fingerposition (35,36) abgebremsten Packstücke (22) durch den unteren Austritt (32) des Transportkanals (27) aus dem Transportkanal (27) in den Behälter (21) entlassen werden.

11. Verfahren nach Anspruch 10,
- bei dem die Bewegungsrichtung der Packstücke (22) wenigstens von den Fingerelementen (49) der oberen Fingerposition (34,35) und/oder der unteren Fingerposition (35,36) wenigstens teilweise in einer Richtung senkrecht zur Schwerkraftrichtung umgelenkt wird und
- bei dem, vorzugsweise, die Packstücke (22) von wenigstens einem Fingerelement (49) und/oder Handelement (44) der wenigstens einen oberen Fingerposition (34,35) in Richtung des wenigstens einen Fingerelements (49) und/oder Handelements (44) der wenigstens einen unteren Fingerposition (35,36) umgelenkt werden.

12. Verfahren nach Anspruch 10 oder 11,
- bei dem das Abbremsen und/oder Umlenken der Packstücke (22) durch ein teilweises Auffangen durch das wenigstens eine Fingerelement (49) und/oder Handelement (44) der wenigstens einen Fingerposition (34,35,36) erfolgt und/oder
- bei dem das Umlenken und/oder Weitergeben der, insbesondere wenigstens teilweise aufgefangenen, Packstücke (22) entlang des Transportkanals (27) durch ein Verstellen des wenigstens einen Fingerelements (49) der Fingerposition (34,35,36) und/oder des Handelements (44) nach unten und/oder oben und/oder durch Spreizen einer Mehrzahl von Fingerelementen (49) der Fingerposition (34,35,36) und/oder des Handelements (44) der Fingerposition (34,35,36) erfolgt und/oder
- bei dem die aus dem unteren Austritt (32) des Transportkanals (27) austretenden Packstücke (22) in Schwerkraftrichtung in den Behälter (21), insbesondere Rollbehälter, fallen.

13. Verfahren nach einem der Ansprüche 10 bis 12,
- bei dem ein unterer, dem unteren Austritt (32) des Transportkanals (27) zugeordneter Abschnitt (30) des Transportkanals (27) während des Beladens des Behälters (21) wenigstens zeitweise in einer in den Behälter (21) eingesteckten Position gehalten wird und
- bei dem, vorzugsweise, der untere Abschnitt (30) des Transportkanals (27) während des Beladens des Behälters (21) wenigstens zeitweise, insbesondere schrittweise, und wenigstens teilweise aus dem Behälter (21) herausgezogen wird.

## Claims

1. Loading apparatus (20) for loading a container (21), in particular a roll container, with packages, comprising a transport channel (27) for transporting the packages (22) one after another in the direction of the container (21), wherein the transport channel (27) has an upper inlet (29) for feeding the packages (22) into the transport channel (27) and a lower outlet (32) for feeding the packages (22) into the container (21), and wherein at least one upper finger position (34, 35) with at least one finger element (49) and at least one lower finger position (35, 36) with at least one finger element (49) are provided in the transport channel (27),
**characterized in that**
- the at least one finger elements (49) of the upper finger position (34, 35) and of the lower finger position (35, 36) respectively have at least two flexible flank elements (2, 3) extending together from one end of the finger element (49) to the opposite end of the finger element (49),
- that the at least two flexible flank elements (2, 3) of the finger elements (49) are respectively flexibly connected to one another via a plurality of webs (6), so that the finger elements (49) can respectively be moved from at least one curved position into at least one extended position and back,
- that at least one finger position (34, 35, 36) is provided with a plurality of finger elements (49), and
- that at least one hand element (44) comprising at least some finger elements (49) of the plurality of finger elements (49) of the respective finger position (34, 35, 36) is provided at at least one finger position (34, 35, 36).

2. Loading apparatus according to claim 1,
**characterized in that**
- the finger elements (49) of the at least one hand element (44) are arranged spreading slightly laterally from one another or extending at least substantially parallel to one another, and/or
- the finger elements (49) of the at least one hand element (44) are provided engaging together on a palm element (38) of the hand element (44).

3. Loading apparatus according to claim 1 or 2,
**characterized in that**
- at least one drive unit (40) for moving the at least two flank elements (2, 3) of the respective finger element (49) relative to one another in a longitudinal direction of the finger element (49) from a curved into an extended position and/or back is assigned to at least one finger element (49) of at least one finger position (34, 35, 36) and/or of at least one hand element (44) of at least one finger position (34, 35, 36), and that, preferably, at least one drive unit (40) for moving the at least two flank elements (2, 3) of the respective finger element (49) relative to one another in a longitudinal direction of the finger element (49) from a curved into an extended position and/or back is assigned to all finger elements (49) of at least one finger position (34, 35, 36) and/or of at least one hand element (44).

4. Loading apparatus according to any one of claims 1 to 3,
**characterized in that**
- at least one pressure sensor for detecting the pressure exerted on the flank element (2, 3), the finger element (49) and/or the hand element (44) is assigned to at least one finger element (49) of at least one finger position (34, 35, 36) and/or at least one hand element (44), in particular at least one flank element (2, 3) of at least one finger element (49).

5. Loading apparatus according to any one of claims 1 to 4,
**characterized in that**
- the extension of the at least one finger element (49) and/or hand element (44) of a finger position (34, 35, 36) in the direction of the associated free end, in a projection onto a horizontal plane and/or a cross-sectional plane (E) of the transport channel (27), forms an angle (W) of between 45° and 315°, preferably between 90° and 270°, in particular between 135° and 225°, with the extension of a finger element (49) and/or hand element (44) of another finger position (34, 35, 36) in the direction of the associated free end, and that, preferably,
- the extensions of finger elements (49) and/or hand elements (44) of, in particular respectively every, finger positions (34, 35, 36) succeeding one another in the direction of gravity, in the direction of the associated free end, in a projection onto a horizontal plane and/or a cross-sectional plane (E) of the transport channel (27), enclose an angle (W) of between 45° and 315°, preferably between 90° and 270°, in particular between 135° and 225°.

6. Loading apparatus according to any one of claims 1 to 5,
**characterized in that**
- the finger elements (49) and/or hand elements (44) of finger positions (34, 35, 36) spaced from one another, in particular successive, in the direction of gravity are provided on at least substantially opposite inner sides of the transport channel (27).

7. Loading apparatus according to any one of claims 1 to 5,
**characterized in that**
- the lower and/or lowermost finger position (35, 36) of the transport channel (27) is spaced above the lower outlet (32) of the transport channel (27) in the direction of gravity by less than 2 m, preferably less than 1.5 m, in particular less than 1 m, more in particular less than 0.5 m, from the outlet (32) of the transport channel (27).

8. Loading apparatus according to any one of claims 1 to 7,
**characterized in that**
- the transport channel (27), in particular a center line (43) of the transport channel (27), is at least substantially straight and/or that the transport channel (27), in particular a center line (43) of the transport channel (27), has an angle to the direction of gravity of less than 45°, preferably less than 30°, in particular less than 15°.

9. Loading apparatus according to any one of claims 1 to 8,
**characterized in that**
- the transport channel (27) is formed at least as an at least substantially closed channel, in particular one having at least substantially a rectangular or round cross-section, and/or that a funnel-shaped section (28), in particular tapering in the direction of gravity and/or in the transport direction of the packages (22) along the transport channel (27), is assigned to the upper inlet (29) of the transport channel (27).

10. Method for loading a container (21), in particular a roll container, with packages (22), using a loading apparatus (20) according to any one of claims 1 to 9,
- in which the packages (22) are introduced one after another into the upper inlet (29) of the transport channel (27),
- in which the packages (22) introduced into the inlet (29) of the transport channel (27) come into contact with the at least one finger element (49) of the upper finger position (34, 35) and are decelerated by the at least one finger element (49),
- in which the packages (22) decelerated by the at least one finger element (49) of the upper finger position (34, 35) come into contact with the at least one finger element (49) of the lower finger position (35, 36) and are decelerated by the at least one finger element (49), and
- in which the packages (22) decelerated by the at least one finger element (49) of the lower finger position (35, 36) are released through the lower outlet (32) of the transport channel (27) from the transport channel (27) into the container (21).

11. Method according to claim 10, in which the direction of movement of the packages (22) is deflected at least partially in a direction perpendicular to the direction of gravity by at least the finger elements (49) of the upper finger position (34, 35) and/or the lower finger position (35, 36), and in which, preferably, the packages (22) are deflected by at least one finger element (49) and/or hand element (44) of the at least one upper finger position (34, 35) in the direction of the at least one finger element (49) and/or hand element (44) of the at least one lower finger position (35, 36).

12. Method according to claim 10 or 11, in which the deceleration and/or deflection of the packages (22) takes place by at least partial catching by the at least one finger element (49) and/or hand element (44) of the at least one finger position (34, 35, 36), and/or in which the deflection and/or passing on of the, in particular at least partially caught, packages (22) along the transport channel (27) takes place by moving the at least one finger element (49) of the finger position (34, 35, 36) and/or the hand element (44) downward and/or upward and/or by spreading a plurality of finger elements (49) of the finger position (34, 35, 36) and/or the hand element (44) of the finger position (34, 35, 36), and/or in which the packages (22) exiting from the lower outlet (32) of the transport channel (27) fall in the direction of gravity into the container (21), in particular roll container.

13. Method according to any one of claims 10 to 12, in which a lower section (30) of the transport channel (27) associated with the lower outlet (32) of the transport channel (27) is held at least temporarily in a position inserted into the container (21) during the loading of the container (21), and in which, preferably, the lower section (30) of the transport channel (27) is pulled out at least temporarily, in particular stepwise, and at least partially from the container (21) during the loading of the container (21).

## Revendications

1. Dispositif de chargement (20) pour charger un contenant (21), en particulier un contenant roulant, avec des colis, comprenant un canal de transport (27) pour le transport des colis (22) l'un après l'autre en direction du contenant (21), où le canal de transport (27) a une entrée supérieure (29) pour amener les colis (22) dans le canal de transport (27) et une sortie inférieure (32) pour amener les colis (22) dans le contenant (21) et où dans le canal de transport (27) au moins une position de doigt supérieure (34,35) avec au moins un élément de doigt (49) et au moins une position de doigt inférieure (35,36) avec au moins un élément de doigt (49) sont prévus,
**caractérisé en ce**
**que** les au moins un éléments de doigt (49) de la position de doigt supérieure (34,35) et de la position de doigt inférieure (35,36) ont respectivement au moins deux éléments de flanc (2,3) flexibles s'étendant ensemble d'une extrémité de l'élément de doigt (49) à l'extrémité opposée de l'élément de doigt (49), que les au moins deux éléments de flanc (2,3) flexibles des éléments de doigt (49) sont respectivement reliés de façon flexible entre eux par une pluralité d'entretoises (6), de sorte que les éléments de doigt (49) peuvent être déplacés respectivement d'au moins une position courbée vers au moins une position étirée et inversement, qu'une pluralité d'éléments de doigt (49) est prévue à au moins une position de doigt (34,35,36) et qu'à au moins une position de doigt (34,35,36) au moins un élément de main (44) comprenant au moins quelques éléments de doigt (49) de la pluralité d'éléments de doigt (49) de la position de doigt (34,35,36) respective est prévu.

2. Dispositif de chargement selon la revendication 1,
**caractérisé en ce**
**que** les éléments de doigt (49) de l'au moins un élément de main (44) sont disposés en s'écartant légèrement latéralement l'un de l'autre ou en s'étendant au moins essentiellement parallèlement l'un à l'autre et/ou que les éléments de doigt (49) de l'au moins un élément de main (44) sont prévus de manière agissante conjointement sur un élément de paume (38) de l'élément de main (44).

3. Dispositif de chargement selon la revendication 1 ou 2,
**caractérisé en ce**
**qu'**au moins un élément de doigt (49) d'au moins une position de doigt (34,35,36) et/ou d'au moins un élément de main (44) d'au moins une position de doigt (34,35,36) est associé à au moins une unité d'entraînement (40) pour déplacer les au moins deux éléments de flanc (2,3) de l'élément de doigt (49) respectif dans une direction longitudinale de l'élément de doigt (49) l'un par rapport à l'autre d'une position courbée vers une position étirée et/ou inversement et que, de préférence, à tous les éléments de doigt (49) d'au moins une position de doigt (34,35,36) et/ou d'au moins un élément de main (44) est associée au moins une unité d'entraînement (40) pour déplacer les au moins deux éléments de flanc (2,3) de l'élément de doigt (49) respectif dans une direction longitudinale de l'élément de doigt (49) l'un par rapport à l'autre d'une position courbée vers une position étirée et/ou inversement.

4. Dispositif de chargement selon l'une des revendications 1 à 3,
**caractérisé en ce**
**qu'**au moins un élément de doigt (49) d'au moins une position de doigt (34,35,36) et/ou d'au moins un élément de main (44), en particulier au moins un élément de flanc (2,3) d'au moins un élément de doigt (49), est associé à au moins un capteur de pression pour détecter la pression exercée sur l'élément de flanc (2,3), l'élément de doigt (49) et/ou l'élément de main (44).

5. Dispositif de chargement selon l'une des revendications 1 à 4, **caractérisé en ce**
**que** l'extension d'au moins un élément de doigt (49) et/ou d'un élément de main (44) d'une position de doigt (34,35,36) en direction de l'extrémité libre associée forme dans une projection dans un plan horizontal et/ou dans un plan en coupe transversale (E) du canal de transport (27) un angle (W) compris entre 45° et 315°, de préférence entre 90° et 270°, en particulier entre 135° et 225°, par rapport à l'extension d'un élément de doigt (49) et/ou d'un élément de main (44) d'une autre position de doigt (34,35,36) en direction de l'extrémité libre associée et que, de préférence, l'extension des éléments de doigt (49) et/ou des éléments de main (44) de positions de doigt (34,35,36) se succédant dans la direction de la pesanteur, en particulier de toutes les positions de doigt se succédant respectivement, en direction de l'extrémité libre associée inclut dans une projection dans un plan horizontal et/ou dans un plan en coupe transversale (E) du canal de transport (27) un angle (W) compris entre 45° et 315°, de préférence entre 90° et 270°, en particulier entre 135° et 225°.

6. Dispositif de chargement selon l'une des revendications 1 à 5,
**caractérisé en ce**
**que** les éléments de doigt (49) et/ou les éléments de main (44) de positions de doigt (34,35,36) espacées l'une de l'autre dans la direction de la pesanteur, en particulier se succédant, sont prévus sur des côtés intérieurs, au moins essentiellement opposés l'un de l'autre, du canal de transport (27).

7. Dispositif de chargement selon l'une des revendications 1 à 5,
**caractérisé en ce**
**que** la position de doigt inférieure et/ou la plus basse (35,36) du canal de transport (27) est disposée dans la direction de la pesanteur à moins de 2 m, de préférence à moins de 1,5 m, en particulier à moins de 1 m, encore plus en particulier à moins de 0,5 m, de la sortie (32) du canal de transport (27), au-dessus de la sortie inférieure (32) du canal de transport (27).

8. Dispositif de chargement selon l'une des revendications 1 à 7,
**caractérisé en ce**
**que** le canal de transport (27), en particulier une ligne centrale (43) du canal de transport (27), est réalisé au moins essentiellement de manière rectiligne et/ou que le canal de transport (27), en particulier une ligne centrale (43) du canal de transport (27), a un angle par rapport à la direction de la pesanteur de moins de 45°, de préférence de moins de 30°, en particulier de moins de 15°.

9. Dispositif de chargement selon l'une des revendications 1 à 8,
**caractérisé en ce**
**que** le canal de transport (27) est réalisé au moins comme un canal au moins essentiellement fermé ayant en particulier au moins essentiellement une section transversale rectangulaire ou ronde et/ou qu'une section en forme d'entonnoir (28), se rétrécissant en particulier dans la direction de la pesanteur et/ou dans la direction de transport des colis (22) le long du canal de transport (27), est associée à l'entrée supérieure (29) du canal de transport (27).

10. Méthode pour charger un contenant (21), en particulier un contenant roulant, avec des colis (22), avec un dispositif de chargement (20) selon l'une des revendications 1 à 9,
- où les colis (22) sont introduits l'un après l'autre dans l'entrée supérieure (29) du canal de transport (27),
- où les colis (22) introduits dans l'entrée (29) du canal de transport (27) entrent en contact avec l'au moins un élément de doigt (49) de la position de doigt supérieure (34,35) et sont frenés par l'au moins un élément de doigt (49),
- où les colis (22) frenés par l'au moins un élément de doigt (49) de la position de doigt supérieure (34,35) entrent en contact avec l'au moins un élément de doigt (49) de la position de doigt inférieure (35,36) et sont frenés par l'au moins un élément de doigt (49) et
- où les colis (22) frenés par l'au moins un élément de doigt (49) de la position de doigt inférieure (35,36) sont libérés par la sortie inférieure (32) du canal de transport (27) hors du canal de transport (27) dans le contenant (21).

11. Méthode selon la revendication 10, où la direction de mouvement des colis (22) est au moins en partie déviée dans une direction perpendiculaire à la direction de la pesanteur au moins par les éléments de doigt (49) de la position de doigt supérieure (34,35) et/ou de la position de doigt inférieure (35,36) et où, de préférence, les colis (22) sont déviés par au moins un élément de doigt (49) et/ou un élément de main (44) de l'au moins une position de doigt supérieure (34,35) en direction d'au moins un élément de doigt (49) et/ou d'un élément de main (44) de l'au moins une position de doigt inférieure (35,36).

12. Méthode selon la revendication 10 ou 11,
- où le freinage et/ou la déviation des colis (22) s'effectue par une interception partielle par l'au moins un élément de doigt (49) et/ou l'élément de main (44) de l'au moins une position de doigt (34,35,36) et/ou
- où la déviation et/ou le transfert des colis (22), en particulier au moins partiellement interceptés, le long du canal de transport (27) s'effectue par un déplacement de l'au moins un élément de doigt (49) de la position de doigt (34,35,36) et/ou de l'élément de main (44) vers le bas et/ou vers le haut et/ou par l'écartement d'une pluralité d'éléments de doigt (49) de la position de doigt (34,35,36) et/ou de l'élément de main (44) de la position de doigt (34,35,36) et/ou
- où les colis (22) sortant de la sortie inférieure (32) du canal de transport (27) tombent dans la direction de la pesanteur dans le contenant (21), en particulier un contenant roulant.

13. Méthode selon l'une des revendications 10 à 12,
- où une section inférieure (30) du canal de transport (27), associée à la sortie inférieure (32) du canal de transport (27), est maintenue au moins par moments dans une position insérée dans le contenant (21) pendant le chargement du contenant (21) et
- où, de préférence, la section inférieure (30) du canal de transport (27) est au moins temporairement, en particulier progressivement, et au moins partiellement retirée du contenant (21) pendant le chargement du contenant (21).
